## Europäisches Patentamt
## European Patent Office
## Office européen des brevets

(19)

(11) Numéro de publication: **0 006 070**
**B1**

(12) **FASCICULE DE BREVET EUROPEEN**

(45) Date de publication du fascicule de brevet: 29.04.81

(51) Int. Cl.³: **C 01 F 7/20, C 01 F 7/26**

(21) Numéro de dépôt: 79420022.0

(22) Date de dépôt: **10.05.79**

(54) Procédé d'obtention d'alumine pure par attaque chlorhydrique de minerais alumineux et extraction des impuretés par un traitement sulfurique.

(30) Priorité: 18.05.78 FR 7815369

(43) Date de publication de la demande:
12.12.79 Bulletin 79/25

(45) Mention de la délivrance du brevet:
29.04.81 Bulletin 81/17

(84) Etats contractants désignés:
DE GB NL

(56) Documents cités:
DE-A-2 807 850
DE-A-2 807 862
FR-A-1 541 467
FR-A-1 558 347
GB-A-982 098
GB-A-1 104 088
US-A-2 376 696

(73) Titulaire: ALUMINIUM PECHINEY, 28, rue de Bonnel,
F-69433 Lyon Cedex 3 (FR)

(72) Inventeur: Cohen, Joseph, 17 Chemin des Gardes,
F-13100 Aix-en-Provence (FR)
Inventeur: Adjemian, Alain Résidence Sainte-Victoire,
Bâtiment A 68 Avenue Saint-Jérôme,
F-13100 Aix-en-Provence (FR)

(74) Mandataire: Gaucherand, Michel et al, PECHINEY UGINE
KUHLMANN 28 rue de Bonnel, F-69433 Lyon Cedex 3 (FR)

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Procédé d'obtention d'alumine pure par attaque chlorhydrique de minerais alumineux
et extraction des impuretés par un traitement sulfurique

L'invention concerne un nouveau procédé d'obtention d'alumine pure comprenant en combinaison nouvelle, l'attaque chlorhydrique de minerais alumineux contenant des impuretés suivie d'un traitement de concentration de la liqueur résultant de l'attaque, la précipitation de la majeure partie de chlorure d'aluminium hexahydraté et sa séparation d'une première liqueur-mère chlorhydrique, la pyrohydrolyse du précipité l'alumine pure recherchée avec recyclage de l'acide chlorhydrique à l'attaque, la précipitation de la fraction restante de chlorure d'aluminium dans la première liqueur-mère par insufflation de HCl gazeux et sa séparation d'une deuxième liqueurmère chlorhydrique, enfin l'élimination des impuretés présentes dans cette dernière liqueur par une précipitation sulfurique.

On a déjà proposé, et ce, depuis longtemps, l'attaque chlorhydrique de minerais alumineux pour en extraire l'alumine. Si ces procédés présentent entre eux le trait commun de l'attaque chlorhydrique, ils apparaissent très différents sur les moyens mis en œuvre pour éliminer les impuretés provenant du minerai. C'est ainsi que le brevet britannique n° 982.098 a proposé l'attaque d'un minerai argileux calciné par une solution chlorhydrique à 20%, puis, après séparation de la fraction stérile constituée par de la silice, l'extraction des impuretés, essentiellement constituées par le fer, présentes dans la liqueur séparée, par échange d'ions soit sur une résine solide, soit par un solvant organique. La précipitation du chlorure d'aluminium hexahydraté était alors obtenue par évaporation de la liqueur purifiée, bien qu'intéressant, offrait malgré tout l'inconvénient de nécessiter une régénération de la résine ou du solvant, régénération exigeant de très grands volumes de liqueurs qu'il fallait ensuite traiter avant leur rejet, consommant ainsi une grande quantité d'énergie.

Un autre document, plus récent, le brevet britannique n° 1.104.088, a également décrit l'attaque chlorhydrique de minerais alumineux, la cristallisation du chlorure d'aluminium hexahydraté en opérant cette cristallisation en plusieurs étapes, la première donnant, par exemple, le chlorure d'aluminium hexahydraté pur, tandis que les autres fournissaient le chlorure d'aluminium hydraté impur.

L'élimination des impuretés présentes dans le minerai d'origine, et que l'on retrouvait en solution dans la liqueur après attaque, s'effectuait sur un prélèvement de la liqueur-mère provenant de la dernière cristallisation du chlorure d'aluminium hexahydraté, par évaporation et cristallisation.

Malgré tout l'intérêt qu'un tel procédé pouvait présenter à l'homme de l'art, il est apparu des inconvénients à son usage, dont deux sont véritablement importants:

— le prélèvement de la liqueur-mère provenant de la dernière cristallisation du chlorure d'aluminium représentait un volume conséquent et, par là-même, une quantité importante d'énergie pour provoquer la cristallisation des impuretés par évaporation de l'eau;
— outre ce fait, cette liqueur prélevée après la dernière cristallisation était riche en aluminium avec un taux supérieur à 13%, entraînant des pertes inacceptables en cette matière.

Enfin, un procédé beaucoup plus récent a été proposé et décrit dans le brevet français 1.541.467. Après une attaque chlorhydrique du minerai alumineux, puis la cristallisation en au moins deux étapes du chlorure d'aluminium hexahydraté par évaporation d'eau, le calcium présent en solution dans la liqueur-mère, obtenue après la première cristallisation du chlorure d'aluminium hexahydraté, était précipité sous forme de sulfate de calcium, et séparé de ladite liqueur par l'addition d'une quantité stoéchiométrique d'acide sulfurique, tandis que le fer était extrait au moyen d'un solvant organique sélectif ou d'un séquestrant. Ce procédé manifestait également des inconvénients tels que, une perte de solvant avec des liqueurs aqueuses, ainsi que la nécessité de purger les impuretés non éliminées par le solvant, impliquant une perte en chlorure d'aluminium hydraté.

Bien que ces procédés cycliques offrent de nombreux avantages, force était de constater que leur application ne pouvait être suffisamment générale dans la conjoncture économique actuelle, tant par les importantes consommations d'énergie qu'ils sollicitent, que par des rejets d'effluents dans les voies naturelles, qui sont de plus en plus prohibés.

La demanderesse, poursuivant ses recherches en ce domaine, a tenté de mettre au point un procédé d'attaque chlorhydrique de minerais alumineux qu'elle a combiné avec une épuration efficace de la liqueurmère obtenue après la précipitation et la séparation de la majeure partie du chlorure d'aluminium hexahydraté, l'épuration étant effectuée sur la totalité de la liqueur ainsi recueillie.

Le procédé selon l'invention qui permet d'obtenir une alumine très pure à partir d'un minerai alumineux calciné ou non, contenant des impuretés, comportant une attaque chlorhydrique à chaud du minerai, la séparation du résidu d'attaque et de la liqueur d'attaque, le lavage du résidu d'attaque, la concentration de la liqueur d'attaque provoquant la précipitation de AlCl₃, 6 H₂O, la calcination de ce chlorure et le recyclage des effluents, se caractérise en ce que, dans une première étape, la concentration de la liqueur provenant de l'attaque est poussée jusqu'à l'obention d'au plus 75% d'Al$_2$O$_3$ présente dans la liqueur, sous forme de chlorure d'aluminium hexahydraté, en ce que, dans une deuxième étape, la fraction d'alumine encore en solution dans la liqueur contenant les impuretés et obtenue par séparation des cristaux de AlCl$_3$, 6 H$_2$O de la première étape, est précipitée par introduction d'HCl gazeux, séparée de la liqueur chlorhydrique pauvre en alumine, mais contenant les impuretés et recyclée dans la liqueur provenant de l'attaque, tandis que la liqueur chlorhydrique pauvre en alumine et riche en impuretés est mélangée à une liqueur sulfurique de recyclage, le mélange étant dégazé par chauffage pour récupérer HCl gaz servant dans la deuxième étape, en ce que du potassium éventuellement recyclé, en introduit dans la liqueur sulfurique d'impuretés en vue de précipiter par concentration de ladite liqueur le sulfate ferripotassique et les autres sulfates d'impuretés, correspondant à la quantité des impuretés provenant du minerai et à recycler la liqueur-mère sulfurique débarrassée des impuretés vers la liqueur-mère chlorhydrique de la deuxième étape.

Le procédé selon l'invention comprend les phases suivantes:

— l'attaque d'un minerai alumineux, calciné ou non selon la nature, contenant également d'autres constituants tels que le fer, le calcium, etc. ... par une solution aqueuse chlorhydrique recyclée contenant en poids environ 20% de HCl libre et entre 1% et 3% de chlorures d'aluminium et des divers métaux formant les impuretés encore présentes dans ladite liqueur, pouvant conduire à l'obtention d'une solution après attaque, riche en chlorure d'aluminium dissous, pouvant atteindre une concentration de 8 − 9% d'Al$_2$O$_3$ en poids;

— la séparation d'un résidu d'attaque imprégné et d'une liqueur chlorhydrique;

— le traitement de ce résidu d'attaque pour en extraire la liqueur d'imprégnation au moyen d'une quantité adéquate d'eau de lavage pour obtenir des inertes qui sont éliminées et une solution aqueuse recyclée à l'attaque;

— la concentration de la liqueur chlorhydrique contenant l'alumine et les impuretés solubles jusqu'à précipitation d'au plus 75% de l'alumine présente sous la forme de chlorure d'aluminium hydraté, répondant à la formule AlCl$_3$, 6 H$_2$O;

— la séparation de cette première fraction cristallisée, de chlorure d'aluminium hydraté imprégnée d'eaux-mères et d'une première liqueur-mère chlorhydrique contenant en solution le restant de l'alumine, et la quasi-totalité des impuretés;

— le lavage de ces cristaux de chlorure d'aluminium hydraté par une liqueur chlorhydrique;

— le recyclage à l'attaque du minerai de la liqueur chlorhydrique provenant du lavage du chlorure d'aluminium hydraté;

— la décomposition thermique du chlorure d'aluminium hydraté donnant l'alumine pure et l'absorption des effluents gazeux chlorhydriques pour constituer la liqueur de lavage précitée;

— la chloruration de la première liqueur-mère chlorhydrique riche en impuretés par de l'HCl gazeux, dans le but de récupérer l'alumine contenue;

— la séparation de la deuxième fraction cristallisée de chlorure d'aluminium hydraté et de la deuxième liqueur-mère chlorhydrique riche en impuretés solubilisées, et le recyclage de ladite fraction solide dans la liqueur après attaque, mais avant concentration;

— l'introduction d'une liqueur sulfurique recyclée dans la deuxième liqueur-mère chlorhydrique riche en impuretés;

— le dégazage de la liqueur-mère sulfo-chlorhydrique ainsi obtenue, avec recyclage de l'HCl gazeux à la chloruration précitée;

— l'introduction de potassium sous forme convenable, sulfate, chlorure ou alun éventuellement recyclé;

— la concentration de liqueur-mère sulfurique avec départ des dernières traces d'HCl, jusqu'à la précipitation des sulfates d'impuretés correspondant aux quantités d'impuretés provenant de l'attaque du minerai et du sulfate de potassium introduit;

— enfin, la séparation des cristaux de sulfates d'impuretés et de la liqueur sulfurique qui est recyclée dans la liqueur-mère chlorhydrique riche en impuretés avant le dégazage de ladite liqueur.

La solution d'attaque des minerais alumineux est constituée par des solutions aqueuses recyclées contenant de l'acide chlorhydrique dont la teneur peut être ajustée par un appoint d'HCl neuf en un point quelconque du cycle pour compenser les pertes, ainsi qu'un appoint d'eau qui peut être constitué par l'eau de lavage des inertes, pour obtenir une liqueur d'attaque à 20%.

L'attaque du minerai alumineux s'effectue à chaud, à une température proche de celle de l'ébullition, généralement à la pression atmosphérique, et pendant un temps qui peut varier d'une 1/2 heure à 5 heures.

Après l'attaque chlorhydrique du minerai, le produit de l'attaque comportant une phase solide constituée par des inertes et une phase liquide dans laquelle sont dissous le chlorure d'aluminium et les impuretés solubles, est soumis à une séparation.

Le résidu d'attaque formant la phase solide est alors lavé par une quantité d'eau appropriée, la liqueur, après rinçage des inertes, étant recyclée à l'attaque du minerai.

La liqueur résultant de l'attaque chlorhydrique du minerai alumineux est soumise à une concentration par évaporation jusqu'à la précipitation d'au plus 75% de l'alumine présente, sous forme de chlorure d'aluminium hexahydraté que l'on sépare de sa liqueur-mère chlorhydrique contenant les impuretés.

Les cristaux de chlorure d'aluminium hydraté ainsi obtenus, lavés par une liqueur chlorhydrique, sont d'une grande pureté. Ils sont ensuite calcinés selon un procédé connu, en donnant l'alumine pure souhaitée et de l'HCl gazeux qui, absorbé par de l'eau, constitue la liqueur riche en HCl destinée au lavage dudit précipité.

La liqueur chlorhydrique, par lavage du chlorure d'aluminium hexahydraté, entraîne les impuretés présentes dans le précipité, tout en dissolvant une faible fraction d'alumine qui est de l'ordre de 2%. Cette liqueur, après lavage, est recyclée en tête du procédé, pour constituer la liqueur d'attaque du minerai alumineux.

La première liqueur-mère chlorhydrique, séparée des cristaux de chlorure d'aluminium hexahydraté qui contient l'essentiel des impuretés constituées par du fer, du titane, du sodium, du potassium, du magnésium, du calcium, etc. ... ainsi qu'une fraction non négligeable d'alumine, est alors saturée en HCl par introduction d'acide chlorhydrique gazeux de recyclage, provoquant la précipitation du chlorure d'aluminium hexahydraté résiduel.

Après séparation, le chlorure d'aluminium hydraté, relativement chargé en impuretés, est recyclé dans la liqueur résultant de l'attaque pour être dissous et subir ultérieurement, comme cela a déjà été exprimé, la concentration par évaporation d'eau et la précipitation du chlorure d'aluminium hexahydraté destiné à la calcination.

Après l'élimination de l'alumine encore présente dans la première liqueur-mère d'impuretés, une deuxième liqueur-mère chlorhydrique chargée de ces impuretés est mélangée avec une liqueur sulfurique recyclée contenant entre 45 et 65% de $H_2SO_4$ libre, donnant ainsi une liqueur sulfochlorhydrique contenant les impuretés. Ladite liqueur sulfochlorhydrique est alors dégazée par chauffage, permettant de recueillir l'acide chlorhydrique gazeux destiné à la chloruration de la première liqueur-mère chlorhydrique chargée en impuretés, pour provoquer la précipitation de l'alumine présente, comme cela a déjà été dit. La liqueur sulfurique, à laquelle on peut ajouter du potassium recyclé, est alors soumise à une concentration par évaporation jusqu'à la précipitation des impuretés provenant de l'attaque du minerai, sous la forme de sulfates. Les sels précipités sont essentiellement constitués de sulfates ferripotassique, titano-potassique, sulfate de calcium, phosphore, magnésium et sodium, et ont entraîné les autres impuretés.

Après séparation, la liqueur sulfurique débarrassée d'une quantité d'impuretés égale à celle qui a été introduite dans le cycle de traitement lors de l'attaque, est recyclée, tandis que le résidu solide peut être traité de manières diverses pour recueillir, par exemple, le potassium et/ou d'autres constituants, et est éventuellement calciné pour valoriser le $SO_2$ par sa transformation en $H_2SO_4$ et sa réintroduction dans le circuit.

Le procédé selon l'invention est un procédé cyclique qui permet d'isoler une alumine pure et un mélange de sels d'impuretés se présentant sous la forme de sulfates simples et/ou doubles.

Les consommations en réactif sont faibles et ne concernent que le remplacement des pertes en acides chlorhydrique et sulfurique.

Le procédé selon l'invention est applicable au traitement des matières alumineuses naturelles ou artificielles contenant des impuretés; parmi ces matières, peuvent être cités les minerais silico-alumineux, comme les kaolins, les bauxites siliceuses, les argiles kaoliniques, les schistes houillers ou non, ou encore, des alumines impures provenant de procédé autres.

L'invention sera mieux comprises grâce au schéma annexé à la présente description.

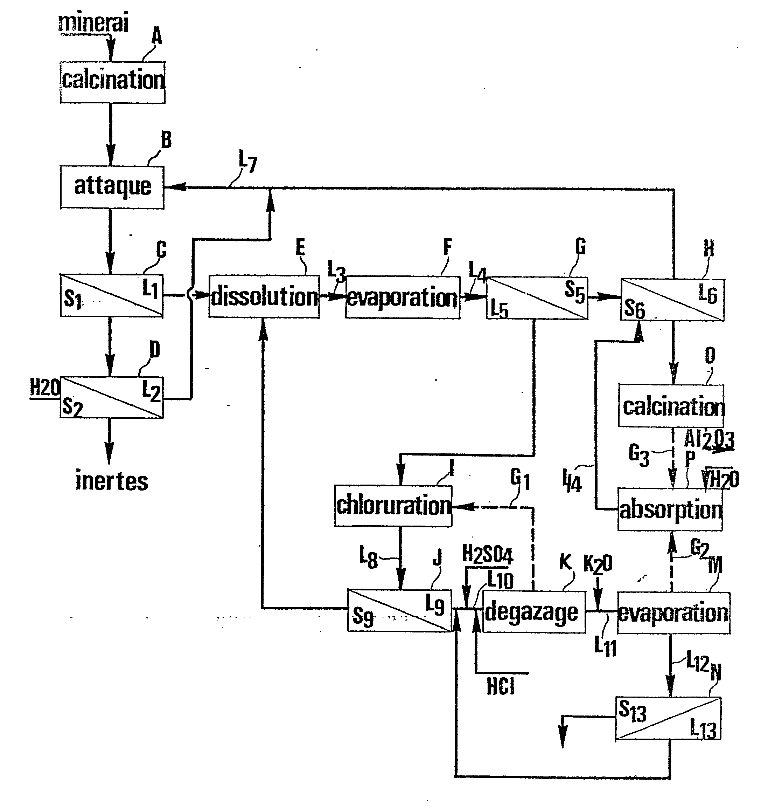

Selon la figure, le minerai alumineux cru est placé en (A) où il subit une calcination.

Puis, le minerai calciné et la liqueur chlorhydrique d'attaque $L_7$ recyclée sont introduits dans le réacteur d'attaque (B). La bouillie obtenue après attaque est conduite de (B) en (C) où s'effectue la séparation d'un résidu d'attaque $S_1$ et d'une liqueur chlorhydrique $L_1$ contenant l'alumine et les impuretés solubilisées. Les eaux-mères d'imprégnation du gâteau $S_1$ sont alors extraites en (D) au moyen d'une quantité adéquate d'eau et la liqueur $L_2$ en résultant est conduite et mélangée à la liqueur $L_7$ avant son introduction à l'attaque. Le gâteau $S_2$ est alors isolé: il est essentiellement constitué par de la silice et les oxydes non solubilisés à l'attaque.

La liqueur $L_1$, obtenue après attaque du minerai et séparation des stériles, est alors introduite en (E) où s'effectue la dissolution de la fraction solide $S_9$ constituée par le chlorure d'alumine hexahydraté, relativement chargé en impuretés, représentant au moins 25% de l'alumine présente dans le minerai soumis à l'attaque.

Après dissolution de cette fraction, la liqueur $L_3$ provenant de (E) est conduite en (F) où s'effectue une concentration par évaporation jusqu'à la précipitation d'au plus 75% de l'alumine présente initialement dans le minerai, sous la forme de chlorure d'aluminium hexahydraté répondant à la formule $AlCl_3, 6 H_2O$.

La fraction $L_4$, provenant de l'évaporation (F) est, en fait, une bouillie constituée par une phase solide et une phase liquide dont on réalise la séparation en (G) en une fraction solide $S_5$ de chlorure d'aluminium hydraté et une liqueur $L_5$ contenant l'essentiel des impuretés constituées par du fer, du titane, du sodium, du potassium, du magnésium, du calcium, etc. ... ainsi que de la fraction d'alumine non précipitée représentant au moins 25% de l'alumine présente initialement dans le minerai.

Les cristaux $S_5$ de chlorure d'aluminium hydraté sont ensuite introduits en (H) où s'effectue un rinçage par une liqueur chlorhydrique $L_{14}$ de recyclage. On obtient ainsi des cristaux purs $S_6$ de $AlCl_3$, 6 $H_2O$ dépouillés de la liqueur-mère chlorhydrique, tandis que cette dernière entraînée par $L_{14}$ constitue une nouvelle liqueur chlorhydrique $L_6$ ne contenant qu'une très faible quantité d'impuretés, qui est, ultérieurement, jointe à la liqueur $L_2$, provenant du lavage des inertes, pour former la liqueur d'attaque $L_7$.

Les cristaux purs $S_6$ imprégnés de la liqueur de rinçage, sont ensuite décomposés thermiquement en (O) en livrant une alumine pure et un mélange gazeux $G_3$ contenant le gaz chlorhydrique et de la vapeur d'eau, absorbés en (P).

Comme cela a déjà été dit, la liqueur $L_5$, provenant de la séparation (G) contient en solution l'essentiel des impuretés et au moins 25% de l'alumine initialement présente dans le minerai.

Cette liqueur $L_5$ est alors introduite en (I) où elle est saturée en HCl par l'introduction de la fraction gazeuse $G_1$ d'HCl de recyclage, provoquant la précipitation de chlorure d'aluminium hexahydraté. La fraction $L_8$ sortant de (I) est une bouillie constituée par une suspension de chlorure d'aluminium hydraté dans une liqueur chlorhydrique.

Cette bouillie $L_8$ est introduite en (J) où elle subit une séparation de phases en donnant des cristaux $S_9$ de chlorure d'aluminium hydraté relativement chargés en impuretés par la présence de la liqueur d'imprégnation, qui sont recyclés dans la zone de dissolution (E), et une liqueur chlorhydrique $L_9$ chargée des impuretés initialement présentes dans le minerai.

La liqueur chlorhydrique $L_9$ est traitée par une liqueur sulfurique de recyclage $L_{13}$, et, éventuellement, par des appoints d'$H_2SO_4$ et HCl pour compenser les pertes consécutives aux diverses étapes du procédé. Le mélange de ces diverses liqueurs constitue la liqueur sulfochlorhydrique $L_{10}$ qui est introduite en (K) où s'effectue un dégazage donnant une liqueur pratiquement sulfurique $L_{11}$ contenant les impuretés et l'HCl gazeux G1 qui est recyclé en (I).

On introduit du potassium dans la liqueur $L_{11}$ sous la forme d'un sel tel que sulfate ou chlorure, puis, la liqueur obtenue est déplacée en (M) où se produit une concentration par évaporation d'eau et élimination des dernières traces d'HCl constituant la fraction gazeuse $G_2$ qui, après condensation, est envoyée à l'absorption (P).

La fraction $L_{12}$ sortant de (M) se présente sous l'aspect d'une bouillie comportant une phase solide constituée par les sulfates complexes d'impuretés à éliminer, précipitées lors de l'évaporation en (M) et une phase liquide qui est une liqueur sulfurique.

Les deux phases sont alors séparées en (N) en un gâteau $S_{13}$, mélange de sulfates complexes de fer, de titane, etc. ... qui peut être, ultérieurement, calciné et une liqueur $L_{13}$ qui est recyclée entre la séparation (J) et le dégazage (K) pour être adjointe à la liqueur chlorhydrique d'impuretés $L_9$.

## Exemple

On a traité selon le procédé de l'invention un kaolin calciné ayant la composition suivante:

| | |
|---|---|
| $Al_2O_3$ | 42,08% |
| $Fe_2O_3$ | 1,37% |
| $TiO_2$ | 2,37% |
| $Na_2O$ | 0,08% |
| $K_2O$ | 0,15% |
| MgO | 0,23% |
| $P_2O_5$ | 0,08% |
| CaO | 1,07% |
| $SiO_2$ et divers | 52,58% |

2619 kg de ce minerai calciné en (A) ont été placés en (B) dans 12 407 kg d'une liqueur chlorhydrique $L_7$ contenant en pour cent en poids:

| | |
|---|---|
| 21,19% | d'HCl total |
| 1,36% | d'$Al_2O_3$ |
| 0,05% | de $Fe_2O_3$ |
| 0,04% | de CaO |
| 77,34% | d'eau |

Le milieu d'attaque se trouvait à une température de 108°C qui a été maintenue à ce niveau pendant deux heures.

La bouillie obtenue après attaque était transvasée en (C) où s'opérait la séparation des phases solide $S_1$ et liquide $L_1$ contenant l'alumine solubilisée et une grande partie des impuretés initialement présentes dans le minerai.

Le gâteau $S_1$ était ensuite rincé en (D) par une quantité d'eau, assurant l'extraction des eaux-mères d'imprégnation des inertes en donnant un résidu inerte $S_2$ et une liqueur résiduelle $L_2$ représentant une masse de 4711 kg, qui était jointe à la liqueur $L_6$ pour constituer la liqueur d'attaque $L_7$ précitée.

Le résidu $S_2$ à l'état sec représentant une masse de 1626 kg avait la composition suivante exprimée en pour cent en poids:

| | |
|---|---|
| $Al_2O_3$ | 4,74% |
| $Fe_2O_3$ | 0,31% |
| $TiO_2$ | 3,75% |
| $K_2O$ | 0,06% |
| CaO | 0,12% |
| $H_2O$ de constitution | 7,13% |
| $SiO_2$ et divers | 83,89% |

La liqueur $L_1$ obtenue après attaque du minerai et séparation des inertes, représentait une masse de 12 607 kg et avait la composition suivante exprimée en pour cent en poids:

| | |
|---|---|
| $Al_2O_3$ | 8,90% |
| $Fe_2O_3$ | 0,28% |
| $Na_2O$ | 0,01% |
| $K_2O$ | 0,02% |
| MgO | 0,05% |
| $P_2O_5$ | 0,01% |
| CaO | 0,23% |
| HCl | 19,62% |
| $H_2O$ | 70,84% |

Cette liqueur $L_1$ était conduite en (E) où s'effectuait la dissolution d'un gâteau $S_9$ recyclé, provenant de la séparation (J). Le gâteau $S_9$, essentiellement constitué par du chlorure d'aluminium hexahydraté impur et chargé des eaux-mères d'imprégnation, représentait une masse de 2439 kg et avait la composition suivante exprimée en pour cent en poids:

| | |
|---|---|
| $Al_2O_3$ | 18,12% |
| $Fe_2O_3$ | 0,25% |
| $K_2O$ | 0,04% |
| MgO | 0,04% |
| CaO | 0,21% |
| HCl | 43,54% |
| $H_2O$ | 37,68% |

Après dissolution en (E), une liqueur $L_3$, représentant une masse de 15 046 kg, était introduite en (F) où elle subissait une concentration par évaporation en perdant 6000 kg d'eau et en donnant 9046 kg d'une suspension $L_4$ de chlorure d'aluminium hexahydraté dans une solution chlorhydrique contenant encore de l'alumine et des impuretés. Cette suspension $L_4$ était transvasée en (G) où s'effectuait la séparation d'un gâteau $S_5$, non encore lavé, ayant une masse de 5433 kg et d'une liqueur-mère $L_5$ contenant en solution la fraction non précipitée de l'alumine et les impuretés telles que le fer, le titane, etc. ... représentant une masse de 3616 kg.

Les cristaux de $S_5$ étaient rincés en (H) par 7763 kg d'une liqueur $L_{14}$ d'acide chlorhydrique de recyclage, ayant une concentration de 32% en donnant 5500 kg de cristaux de $AlCl_3$, 6 $H_2O$ imprégnés et 7696 kg d'une liqueur $L_6$.

Après rinçage, les cristaux purs de chlorure d'aluminium hexahydraté étaient ensuite décomposés thermiquement en (O) en donnant 1000 kg d'alumine pure et des gaz constitués d'HCl et de vapeur d'eau, qui étaient lavés et absorbés par de l'eau en (P) pour constituer, avec la fraction gazeuse condensée $G_2$, la liqueur $L_{14}$ de rinçage du chlorure d'aluminium hexahydraté.

Lors de cette opération, on constate des pertes mécaniques en HCl et en alumine.

La liqueur $L_6$ précitée, destinée à être renvoyée vers l'attaque, avait la composition suivante exprimée en pour cent en poids:

| | |
|---|---|
| $Al_2O_3$ | 1,39% |
| $Fe_2O_3$ | 0,05% |
| MgO | 0,01% |

| | |
|---|---|
| CaO | 0,04% |
| HCl | 32,37% |
| $H_2O$ | 66,13% |

Le mélange des liqueurs $L_2$ et $L_6$ constituait la liqueur d'attaque, qui représentait une masse de 12 407 kg et avait la composition suivante exprimée en pour cent en poids:

| | |
|---|---|
| $Al_2O_3$ | 1,36% |
| $Fe_2O_3$ | 0,05% |
| CaO | 0,04% |
| HCl | 21,19% |
| $H_2O$ | 77,34% |

Comme cela a déjà été exprimé, la liqueur-mère chlorhydrique $L_5$ provenant de la séparation (G) et contenant en solution la fraction non précipitée de l'alumine et des impuretés solubilisées, représentait une masse de 3613 kg. Cette liqueur $L_5$ avait la composition suivante exprimée en pour cent en poids:

| | |
|---|---|
| $Al_2O_3$ | 12,43% |
| $Fe_2O_3$ | 1,02% |
| $TiO_2$ | 0,03% |
| $Na_2O$ | 0,06% |
| $K_2O$ | 0,11% |
| MgO | 0,19% |
| $P_2O_5$ | 0,06% |
| CaO | 0,88% |
| HCl | 31,28% |
| $H_2O$ | 53,89% |

Transvasée en (I), cette liqueur subissait une chloruration par l'introduction de 522 kg de HCl gazeux provenant du dégazage (K). Le produit de la chloruration était déplacé en (J) où s'effectuait la séparation de la liqueur chlorhydrique $L_9$ représentant une masse de 1696 kg et des cristaux $S_9$ de chlorure d'aluminium hexahydraté impurs, dont masse et composition ont déjà été citées. La liqueur $L_9$, sortant de la séparation (J) avait la composition suivante exprimée en pour cent en poids:

| | |
|---|---|
| $Al_2O_3$ | 0,41% |
| $Fe_2O_3$ | 1,83% |
| $TiO_2$ | 0,06% |
| $Na_2O$ | 0,12% |
| $K_2O$ | 0,18% |
| MgO | 0,35% |
| $P_2O_5$ | 0,12% |
| CaO | 1,53% |
| HCl | 34,79% |
| $H_2O$ | 60,61% |

A cette liqueur chlorhydrique $L_9$ était jointe la liqueur sulfurique $L_{13}$ provenant de la séparation (N) qui représentait une masse de 8000 kg et avait la composition suivante exprimée en pour cent en poids:

| | |
|---|---|
| $Al_2O_3$ | 0,28% |
| $Fe_2O_3$ | 0,28% |

| | |
|---|---|
| K₂O | 0,28% |
| H₂SO₄ libre | 55,65% |
| H₂SO₄ total | 57,23% |
| H₂O | 34,69% |

Le mélange des liqueurs $L_9$ et $L_{13}$ représentait une masse de 10 321 kg qui recevait encore 313 kg de $H_2SO_4$ et 115 kg de HCl à 33% pour compenser les pertes produites dans le cycle. La masse ainsi obtenue, soit 10 749 kg, constituait la liqueur $L_{10}$ ayant la composition suivante exprimée en pour cent en poids:

| | |
|---|---|
| Al₂O₃ | 0,32% |
| Fe₂O₃ | 0,57% |
| TiO₂ | 0,01% |
| Na₂O | 0,02% |
| K₂O | 0,44% |
| MgO | 0,06% |
| P₂O₅ | 0,02% |
| CaO | 0,27% |
| H₂SO₄ total | 54,61% |
| HCl | 1,10% |
| H₂O | 42,58% |

La liqueur $L_{10}$ était alors introduite en (K) où s'effectuait un dégazage par chauffage donnant 522 kg de HCl gazeux, conduit vers (I) selon $G_1$ et 10 227 kg d'une liqueur pratiquement sulfurique contenant encore les impuretés, liqueur à laquelle était adjointe une masse de $K_2SO_4$ équivalente à 15 kg de $K_2O$ formant ainsi la liqueur $L_{11}$. Ladite liqueur $L_{11}$ était déplacée en (M) où se produisait une concentration par évaporation de 1088 kg d'eau et l'élimination des dernières traces d'HCl, vapeur d'eau et HCl gazeux étant dirigés vers (P) où s'effectuait l'absorption de HCl.

La fraction $L_{12}$ sortant de (M) représentait une masse de 8542 kg constituée par une phase solide en suspension dans la phase liquide. Introduite en (N), cette fraction $L_{12}$ donnait 542 kg d'un gâteau $S_{13}$ et 8000 kg d'une liqueur sulfurique $L_{13}$.

Le gâteau $S_{13}$ était formé de sulfates doubles d'impuretés à éliminer précipités lors de l'opération d'évaporation en (M) et avait la composition suivante exprimée en pour cent en poids:

| | |
|---|---|
| Al₂O₃ | 1,29% |
| Fe₂O₃ | 5,72% |
| TiO₂ | 0,18% |
| Na₂O | 0,37% |
| K₂O | 3,32% |
| MgO | 1,11% |
| P₂O₅ | 0,38% |
| CaO | 4,80% |
| H₂SO₄ libre | 30,07% |
| H₂SO₄ total | 59,59% |
| H₂O | 23,25% |

La liqueur sulfurique $L_{13}$ était recyclée en aval de la séparation (J) pour être jointe à la liqueur $L_9$.

L'alumine obtenue était extrêmement pure et son analyse a montré que les rares impuretés présentes l'étaient en des quantités exprimées en ppm inférieures à celles généralement mesurées dans les alumines obtenues par les grands procédés industriels:

| | | |
|---|---|---|
| Fe | < | 200 ppm |
| Si | < | 40 ppm |
| Ti | < | 8 ppm |
| K | < | 90 ppm |
| Na | < | 20 ppm |
| Ca | < | 200 ppm |
| Mg | < | 100 ppm |
| P | < | 10 ppm |

**Revendications**

1. Procédé d'obtention d'une alumine contenant

| | | |
|---|---|---|
| Fe | < | 200 ppm |
| Si | < | 40 ppm |
| Ti | < | 8 ppm |
| K | < | 90 ppm |
| Na | < | 20 ppm |
| Ca | < | 200 ppm |
| Mg | < | 100 ppm |
| P | < | 10 ppm |

à partir d'un minerai alumineux, calciné ou non, contenant des impuretés, comportant une attaque chlorhydrique à chaud du minerai, la séparation du résidu d'attaque et de la liqueur d'attaque, le lavage du résidu d'attaque, la concentration de la liqueur d'attaque provoquant la précipitation de $AlCl_3$, 6 $H_2O$ jusqu'à l'obtention d'au plus 75% de l'alumine présente dans la liqueur provenant de l'attaque, la calcination de ce chlorure et le recyclage des effluents, caractérisé en ce que, après séparation d'une première fraction constituée par les cristaux de $AlCl_3$, 6 $H_2O$ représentant au plus 75% de l'alumine présente dans la liqueur provenant de l'attaque, la deuxième fraction de l'alumine encore en solution dans ladite liqueur est précipitée sous la forme de $AlCl_3$, 6 $H_2O$ par introduction d'HCl gazeux, puis est séparée de la liqueur chlorhydrique pauvre en alumine, mais contenant les impuretés et est recyclée dans la liqueur provenant de l'attaque, tandis que la liqueur chlorhydrique pauvre en alumine et riche en impuretés, obtenue par séparation d'avec la deuxième fraction de l'alumine, est mélange à une liqueur sulfurique de recyclage, le mélange étant dégazé par chauffage pour récupérer HCl gaz servant à la précipitation de la deuxième fraction de l'alumine, en ce qu'un sel de potassium appartenant au grape des chlorures er des sulfates ce, est introduit dans la liqueur sulfurique d'impuretés en vue de précipiter par concentration de ladite liqueur, le sulfate ferripotassique et les autres sulfates d'impuretés correspondant à la quantité des impuretés provenant du minerai, et à recycler la liqueur-mère sulfurique débarrassée des impuretés vers la liquer-mère chlorhydrique provenant de la précipitation de la deuxième fraction de l'alumine.

2. Procédé d'obtention d'une alumine selon la revendication 1, caractérisé en ce que l'attaque du minerai s'effectue à chaud à une température proche de l'ébullition.

3. Procédé d'obtention d'une alumine selon les revendications 1 et 2, caractérisé en ce que les sulfates ferri-potassique et d'impuretés sont calcinés pour valoriser le $SO_2$ par sa transformation en $H_2SO_4$ et sa réintroduction dans le circuit du procédé.

4. Procédé d'obtention d'alumine selon la revendication 1, caractérisé en ce que le sel de potassium introduit dans la liqueur sulfurique d'impuretés est recyclé.


**Patentansprüche**

1. Verfahren zur Erzeugung eines < 200 ppm Fe, < 40 ppm Si, < 8 ppm Ti, < 90 ppm K, < 20 ppm Na, < 200 ppm Ca, < 100 ppm Mg, < 10 ppm P enthaltenden Aluminiumoxids aus einem kalzinierten oder nicht kalzinierten, Verunreinigungen enthaltenden Aluminiumerz, das einen salzsauren Aufschluß des Erzes in der Wärme, die Trennung des Aufschlußrückstandes und der Aufschlußflüssigkeit, das Waschen des Aufschlußrückstandes, die Konzentration der Aufschlußflüssigkeit zur Bewirkung der Ausfällung von $AlCl_3 \cdot 6 H_2O$ bis zum Erhalten von höchstens 75% des in der vom Aufschluß stammenden Flüssigkeit vorhandenen Aluminiumoxids, die Kalzinierung dieses Chlorids und die Rückführung der Abflüsse umfaßt, dadurch gekennzeichnet, daß nach Abtrennung einer ersten Fraktion, die von den höchstens 75% des in der vom Aufschluß stammenden Flüssigkeit vorhandenen Aluminiumoxids darstellenden $AlCl_3 \cdot 6 H_2O$-Kristallen gebildet wird, die zweite Fraktion des noch in dieser Flüssigkeit gelösten Aluminiumoxids durch Einführung von gasförmigem HCl in Form von $AlCl_3 \cdot 6 H_2O$ ausgefällt wird, dann von der an Aluminiumoxid armen, jedoch die Verunreinigungen enthaltenden salzsauren Flüssigkeit getrennt und in die vom Aufschluß stammende Flüssigkeit rückgeführt wird, während die salzsaure, an Aluminiumoxid arme und an Verunreinigungen reiche, durch Trennung von der zweiten Aluminiumoxidfraktion erhaltene Flüssigkeit mit einer schwefelsauren Rückführflüssigkeit vermischt wird, wonach das Gemisch durch Erhitzen entgast wird, um HCl-Gas wiederzugewinnen, das zur Ausfällung der zweiten Aluminiumoxidfraktion dient, daß ein zur Gruppe der Chloride und Sulfate gehörendes Kaliumsalz in die schwefelsaure Verunreinigungsflüssigkeit eingeführt wird, um durch Konzentration dieser Flüssigkeit das Eisen(III)-Kaliumsulfat und die anderen Verunreinigungssulfate entsprechend der aus dem Erz stammenden Menge der Verunreinigungen auszufällen, und daß man die von den Verunreinigungen befreite, schwefelsaure Mutterlauge zur salzsauren Mutterlauge rückführt, die von der Ausfällung der zweiten Aluminiumoxidfraktion stammt.

2. Verfahren zur Erzeugung eines Aluminiumoxids nach Anspruch 1, dadurch gekennzeichnet, daß der Aufschluß des Erzes in der Wärme bei einer Temperatur nahe dem Sieden erfolgt.

3. Verfahren zur Erzeugung eines Aluminiumoxids nach den Ansprüchen 1 und 2, dadurch gekennzeichnet, daß die Eisen(III)-Kalium- und Verunreinigungssulfate kalziniert werden, um das $SO_2$ durch seine Umwandlung zu $H_2SO_4$ und seine Wiedereinführung in den Verfahrenskreislauf zu verwerten.

4. Verfahren zur Erzeugung von Aluminiumoxid nach Anspruch 1, dadurch gekennzeichnet, daß das in die schwefelsaure Verunreinigungsflüssigkeit eingeführte Kaliumsalz rückgeführt wird.


**Claims**

1. A process for obtaining an alumina containing less than 200 ppm of Fe, 40 ppm of Si, 8 ppm of Ti, 90 ppm of K, 20 ppm of Na, 200 ppm of Ca, 100 ppm of Mg and 10 ppm of P, from a calcined or uncalcined aluminous ore containing impurities, comprising a hot hydrochloric attack of the ore, the separation of the residue of the attack and the attacking liquor, the washing of the residue of the attack, the concentration of the attacking liquor causing the precipitation of $AlCl_3$, $6 H_2O$ until at most 75% of the alumina present in the liquor originating from the attack is obtained, the calcination of this chloride and the recycling of effluents, characterised in that, after separation of a first fraction constituted by $AlCl_3$, $6 H_2O$ crystals representing at most 75% of the alumina present in the liquor originating from the attack, the second fraction of the alumina which is still dissolved in this said liquor is precipitated in the form of $AlCl_3$, $6 H_2O$ by the introduction of gaseous HCl and is then separated from the hydrochloric liquor which is poor in alumina but contains impurities, and is recycled into the liquor originating from the attack, while the hydrochloric liquor which is poor in alumina and rich in impurities and is obtained by separation from the second fraction of the alumina, is mixed with a recycled sulphuric liquor, the mixture being degassed by heating in order to recover HCl gas which is used to precipitate the second fraction of the alumina, in that a potassium salt being of the group consisting of the chlorures and sulphates, is introduced into the sulphuric liquor of impurities in order to precipitate by concentration of the said liquor the ferripotassium sulphate and the other sulphates of impurities corresponding to the quantity of impurities originating from the ore and in recycling the sulphuric mother liquor which is free from impurities to the hydrochloric mother liquor originating from the precipitation of the second fraction of the alumina.

2. A process for obtaining an alumina according to claim 1, characterised in that the ore is attacked hot at a temperature close to boiling point.

3. A process for obtaining an alumina according to claims 1 and 2, characterised in that the ferripotassium sulphates and sulphates of impurities are calcined in order to make use of the SO$_2$ by converting it into H$_2$SO$_4$ and reintroducing it into the circuit of the process.

4. A process for obtaining an alumina according to claim 1, characterised in that the potassium salt which is introduced into the sulphuric liquor si recycled.